(19) Europäisches Patentamt
European Patent Office
Office européen des brevets

(11) Publication number: **0 040 460**
**A1**

(12) # EUROPEAN PATENT APPLICATION

(21) Application number: 81300576.6

(22) Date of filing: 12.02.81

(51) Int. Cl.³: C 09 B 62/09
D 06 P 3/66

(30) Priority: 21.05.80 GB 8016761

(43) Date of publication of application: 25.11.81 Bulletin 81/47

(84) Designated Contracting States: BE CH DE FR GB IT LI NL

(71) Applicant: IMPERIAL CHEMICAL INDUSTRIES LIMITED
Imperial Chemical House Millbank
London SW1P 3JF(GB)

(72) Inventor: Higginbottom, Robert
69 Ullswater Road
Davyhulme Manchester M31 2SQ(GB)

(72) Inventor: Smith, Trevor James
Beechcroft 20 Norris Road
Brooklands, Sale Cheshire M33 3GN(GB)

(72) Inventor: Yelland, Michael
Edgeside House Ashworth Lane
Waterfoot, Rossendale Lancashire BB4 9TJ(GB)

(74) Representative: Marklow, Raymond Joseph et al,
Imperial Chemical Industries Limited Legal Department: Patents Thames House North Millbank
London SW1P 4QG(GB)

(54) **Reactive dyes.**

(57) A dyestuff which in the free acid form is of the formula:

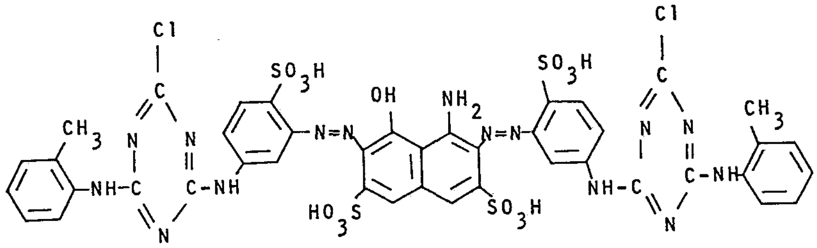

and a process for its preparation.

The dyestuff is a good reactive dyestuff for the colouration of cellulose showing a good depth of colouration which builds up well.

EP 0 040 460 A1

This invention relates to reactive dyestuffs in particular to bisazo reactive dyestuffs.

Many reactive dyestuffs are known of the type

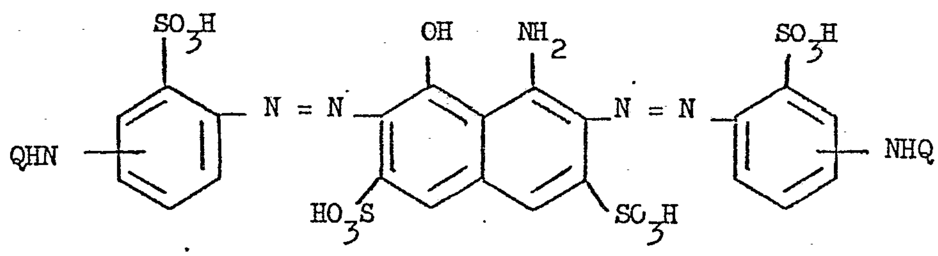

(1)

in which Q is a cellulose reactive group. For example UK 1220823 gives dyes in which NHQ is dichlorotriazinylamino para to the azo group and UK 1387925 shows similar dyes in which Q is chloro(sulphophenylamino)triazinyl. UK 1027614 and Research Disclosure 15209 of December 1976 show also dyes of formula (1) in which NHQ are meta to the azo groups.

The dyestuffs of formula (1) have at least four sulphonic acid groups which contribute to water solubility. The dyes of formula (1) in which Q is dichlorotriazinyl do not have sufficient solubility for use under all conditions though they are quite satisfactory for many application methods. Thus, in general, when Q is a triazinyl group with an aryl amino substituent it is necessary that the aryl group bears a substituent with water solubilising properties if the dyestuff is to have a good

level of water solubility. For example dyes in which Q is a chloro(phenylamino)triazinyl group will almost always have inadequate solubility for most conventional methods of applying reactive dyes unless the phenyl ring carries a water solubilising group such as $SO_3H$.

Therefore we have been surprised to find that dyes of formula (1) in which Q is chloro-(2-methylphenylamino) triazinyl and NHQ is meta to the azo groups does show adequate solubility in a wide range of application methods. Further this dye shows a good depth of colouration on cellulose textiles and builds up well, often better than the closely related sulphophenylamino dyes.

According to the present invention there is provided a dyestuff which in the free acid form is of the formula:

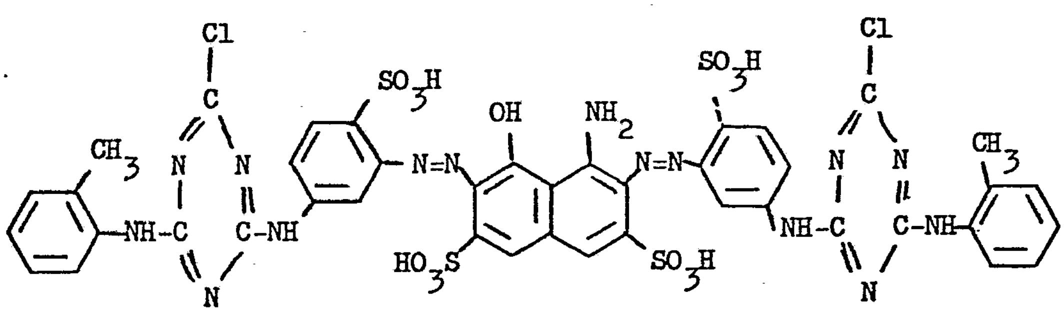

(2)

The dyestuff of formula (2) can be obtained by reacting cyanuric chloride, in either order, with an equimolecular amount of ortho-toluidine and one-half

molecular amount of a bisazo compound of the formula:

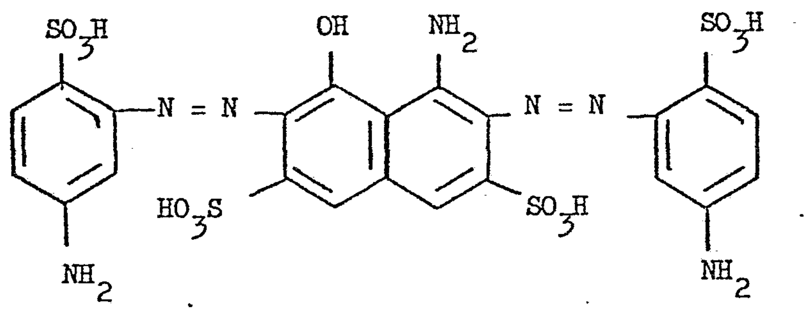

(3)

which may itself be obtained by coupling 1,8-aminonaphthol-3,6-disulphonic acid with two moles of diazotised-3-nitroaniline-6-sulphonic acid followed by reduction, or by coupling 1,8-aminonaphthol-3,6-disulphonic acid with two moles of diazotised 3-acetylaminoaniline-6-sulphonic acid, followed by hydrolysis.

Alternatively equimolar amounts of ortho-toluidine and 1,3-phenylene diamine-6-sulphonic acid may be reacted in either order with cyanuric chloride and the resulting product diazotised and coupled with one-half molar amount of 1,8-aminonaphthol-3,6-disulphonic acid.

In a further method of obtaining dyestuff of formula (2) 1,3-phenylenediamine-6-sulphonic acid may be reacted with cyanuric chloride and the resulting product diazotised and coupled with one-half molar amount of 1,8-aminonaphthol-3,6-disulphonic acid. The resulting bis-dichlorotriazinyl disazo dye may then be condensed with one-molar proportion of ortho-toluidine.

Of the above methods of obtaining dyestuff of formula (2), the method of manufacture usually preferred is to perform on 3-(dichlorotriazinylamino)aniline-6-sulphonic acid in either order the steps of (a) reacting with a molar amount of ortho-toluidine and (b) diazotisation and coupling with one-half molar amount of 1,8-aminonaphthol-3,6-disulphonic acid.

All these reactions use conventional conditions and the dye may be isolated by conventional procedures.

The new reactive dyestuffs are valuable for colouring cellulose textile materials, e.g. textile materials comprising natural or regenerated cellulose such as cotton, linen and viscose rayon. For colouring such materials, the new dyestuffs are preferably applied, either by a printing but preferably a dyeing process to the cellulose textile material in conjunction with a treatment with an acid binding agent, e.g. caustic soda, sodium carbonate, silicate or bicarbonate, which may be applied to the material before, during or after the application of the dyestuff. When so applied the new dyestuffs react with the cellulose and yield navy blue shades having excellent fastness to washing. They are notable for the high proportion which fixes on the material, and good build up. The new dye is also found to be relatively easy to isolate from the liquors in which it is manufactured in a high state of purity.

The invention is illustrated but not limited by the following Examples in which parts are by weight.

Example 1

41.4 parts of 2,4-diaminobenzene sulphonic acid are dissolved in 490 parts of water at pH 5.0 with caustic soda. This solution is added over 45 minutes to a slurry of 41.1 parts of cyanuric chloride in 350 parts water containing a few drops of Calsolene Oil HS (a wetting agent made by Imperial Chemical Industries Limited) and 240 parts of ice. The reaction mixture is stirred for a further 1 hour maintaining the temperature at 0-2°C throughout until the reaction is complete. The pH is then raised slowly over 2 hours to 7.0 with 130 parts of 15% sodium carbonate solution; when the pH is steady, diazotisation was started thus:

To the condensation product are added 380 parts of ice and 15.2 parts of sodium nitrite. 70.5 parts of concentrated (36°Tw) hydrochloric acid are added rapidly maintaining the diazotisation temperature at 0-5°C. After stirring for 15 minutes at 0-5°C the excess sodium nitrite is decomposed with sulphamic acid.

31.9 parts of 1-amino-8-hydroxynaphthalene-3,6-disulphonic acid are dissolved in 105 parts of water and 105 parts of ice at pH 7.0 using sodium hydroxide. This solution is added to the diazonium salt solution as prepared above over 45 minutes maintaining the temperature at 0-5°C. The pH is then raised to 3.0-3.5 over 2-3 hours using 15% sodium carbonate solution

maintaining the temperature at 0-5°C. The pH is maintained at 3.0-3.5 for a further 1½ hours and then raised to 6.9-7.0 over 30-40 minutes using 15% sodium carbonate solution.

The temperature of the resultant disazo is raised to 35-40° and 23.5 parts of 2-aminotoluene are added. The pH is immediately adjusted to 6.5-7.0 and maintained for ½ hour using 15% sodium carbonate solution. Condensation is then complete and the temperature is raised to 55-60°C. 140 parts of sodium chloride are added over 1 hour and stirring is continued for a further 2 hours. The precipitated dyestuff is filtered off and dried at 60°C.

The dark-blue dye when applied to cellulosic textile materials in conjunction with an acid binding agent yields bright navy dyeings of high fixation, excellent build up and good wash off properties.

Example 2

The procedure of Example 1 is repeated but the temperature is raised to 55-60°C rather than 35-40°C prior to adding to 23.5 parts of 2-aminotoluene.

Essentially the same product is obtained but in a slightly different physical form.

Example 3

41.4 Parts of 2,4-diaminobenzenesulphonic acid are dissolved in 490 parts of water at pH 5.0 with caustic soda. This solution is added over 45 minutes to a slurry of 41.1 parts of cyanuric chloride in 350 parts of water containing a few drops of CALSOLENE Oil HS and 240 parts of ice. The reaction mixture is stirred for a further 1 hour

maintaining the temperature at 0-2° throughout until the reaction is complete. The pH is then raised slowly over 2 hours to pH 7.0 with 130 parts of 15% sodium carbonate solution. When the pH is steady, 26.5 parts of 2-aminotoluene are added and the temperature is allowed to rise to ambient. The pH is maintained at 6.5 to 7.0 by adding 80 parts of 15% sodium carbonate solution as required.

After 3 hours, 380 parts of ice, 15.2 parts of sodium nitrite and 27 parts of naphthalene-1,3,6-trisulphonic acid are added followed by 70.5 parts of concentrated (36°Tw) hydrochloric acid added rapidly, maintaining the diazotisation temperature at 0-5°. After stirring for 30 minutes at 0-5° the excess of sodium nitrite is decomposed with sulphamic acid.

31.9 parts of 1-amino-8-hydroxynaphthalene-3,6-disulphonic acid are dissolved in 105 parts of water and 105 parts of ice at pH 7.0 using sodium hydroxide.

4 Parts of thiourea are added to the suspension of the diazotised amine followed by the solution of 1-amino-8-hydroxynaphthalene-3,6-disulphonic acid over 45 minutes maintaining the temperature at 0-5°. The pH is raised to 3.0-3.5 and 2-3 hours using 15% sodium carbonate solution, maintaining 0-5°, until no 1-amino-8-hydroxynaphthalene-3,6-disulphonic acid remains. The pH is then raised to 6.9-7.0 over 30 minutes with 15% sodium carbonate solution to complete the second coupling stage.

The temperature is raised to 55-60°, 140 parts of sodium chloride are added over 1 hour, and stirring is continued for a further 2 hours. The precipitated dyestuff is filtered off and dried at 60°.

CLAIMS

1. A dyestuff which in the free acid form is of the formula:

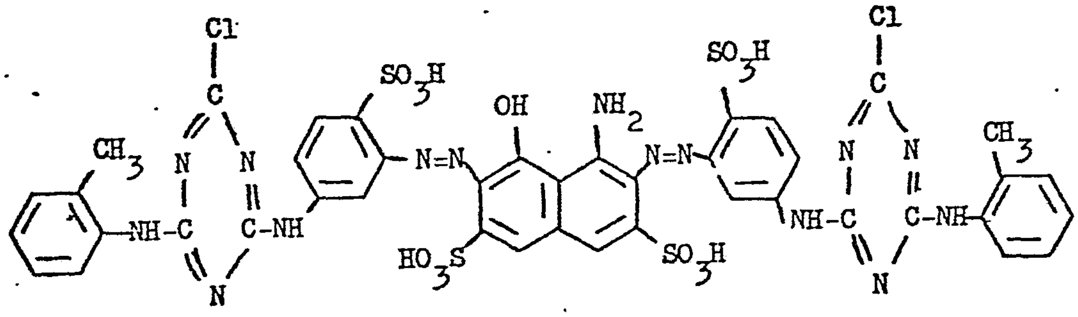

2. A process for the manufacture of the dyestuff as claimed in claim 1 which comprises performing on 3-(dichlorotriazinylamino)aniline-6-sulphonic acid in either order the steps of (a) reacting with a molar amount of ortho-toluidine and (b) diazotisation and coupling with one-half molar amount of 1,8-aminonaphthol-3,6-disulphonic acid.

3. A process as claimed in claim 2 and substantially as herein described in any one of the Examples.

4. A process for the manufacture of the dyestuff as claimed in claim 1 which comprises reacting cyanuric chloride, in either order, with an equimolar amount of ortho-toluidine and one-half molecular amount of a bisazo compound of the formula:

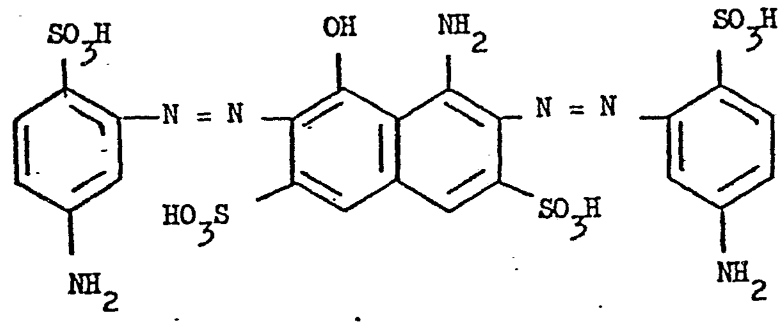

5. A process for the manufacture of the dyestuff as claimed in claim 1 which comprises reacting equimolar amounts of ortho-toluidine and 1,3-phenylenediamine-6-sulphonic acid in either order with cyanuric chloride, diazotising the resulting product and coupling with one-half molar amount of 1,8-aminonaphthol-3,6-disulphonic acid.

6. A process for the manufacture of the dyestuff as claimed in claim 1 which comprises reacting 1,3-phenylene diamine-6-sulphonic acid with cyanuric chloride, diazotising and coupling with one-half molar amount of 1,8-amino-naphthol-3,6-disulphonic acid and reacting the resulting bis-dichlorotriazinyl disazo dye with one molar proportion of ortho-toluidine.

7. A process for the colouration of cellulose textile materials which comprises applying the dyestuff as claimed in claim 1 in conjunction with a treatment with an acid binding agent.

RJM/BH
10.2.81.

European Patent Office

**EUROPEAN SEARCH REPORT**

0040460

Application number

EP 81 30 0576

| Category | DOCUMENTS CONSIDERED TO BE RELEVANT<br>Citation of document with indication, where appropriate, of relevant passages | Relevant to claim | CLASSIFICATION OF THE APPLICATION (Int. Cl.³) |
|---|---|---|---|
| D | RESEARCH DISCLOSURE.INDUSTRIAL OPPORTUNITIES LTD P091 EF Vants Hants UK<br>* No. 15209, page 6, December 1976 * | 1 | C 09 B 62/09<br>D 06 P 3/66 |
| | -- | | |
| | JP - A - 53 117024 (NIPPON KAYAKU)<br>* Whole document * | 1 | |
| | -- | | TECHNICAL FIELDS SEARCHED (Int. Cl.³) |
| | DE - A - 2 740 152 (NIPPON KAYAKU)<br>* Claim 1 *<br>& GB - A - 1 583 387 | 1 | C 09 B 62/09<br>62/08<br>62/04<br>62/03<br>62/026<br>62/022<br>62/02<br>62/01<br>62/006<br>62/002 |
| | -- | | |
| | DE - A - 2 738 823 (CIBA-GEIGY)<br>* Claim 1; page 10, line 7 *<br>& GB - A - 1 542 773 | 1,4,7 | |
| | ---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 27-03-1981 | GINESTET |